# EUROPÄISCHE PATENTSCHRIFT

(11) **EP 4 112 553 B1**
(45) Veröffentlichungstag und Bekanntmachung des Hinweises auf die Patenterteilung: **06.11.2024**
(21) Anmeldenummer: 21182265.5
(22) Anmeldetag: 29.06.2021
(51) Int. Cl.: C01F 5/16

(54) **VERFAHREN ZUR HERSTELLUNG VON MAGNESIUMHYDROXID**
METHOD FOR THE PREPARATION OF MAGNESIUM HYDROXIDE
PROCÉDÉ DE PRODUCTION D'HYDROXYDE DE MAGNÉSIUM

(43) Veröffentlichungstag der Anmeldung: 04.01.2023
(73) Patentinhaber: Nabaltec AG, 92421 Schwandorf (DE)
(72) Erfinder: PESCHKE, Markus, 93149 Nittenau (DE)
(74) Vertreter: Büchel, Edwin

(56) Entgegenhaltungen:
- US-A1- 2001 050 153
- US-A1- 2021 114 891

## Beschreibung

Die vorliegende Erfindung betrifft ein Verfahren zur Herstellung von Magnesiumhydroxid durch Rehydratisierung von kaustischem Magnesiumoxid unter Zugeben des Magnesiumoxids zu einem wässrigen Medium.

Magnesiumhydroxid (MDH) findet unter anderem Einsatz als Flammschutzmittel in Kunststoffen. Dabei wird sowohl natürlich vorkommendes und gemahlenes, als auch synthetisches MDH eingesetzt. Kristallisierte synthetische MDHs sind bei der Verarbeitung und bei den mechanischen und flammschutztechnischen Eigenschaften des Endprodukts im Vorteil.

Hierbei weist Magnesiumhydroxid gerade bei Verarbeitungstemperaturen Vorteile auf, die bereits eine Zersetzung von Aluminiumhydroxid, dem derzeitig hauptsächlich eingesetzten halogenfreien Flammschutzmittel, bedingen.

Der relativ geringe Marktanteil von Magnesiumhydroxid in diesem Anwendungsbereich ist auf seinen hohen Marktpreis zurückzuführen, wobei der hohe Preis auf kostspielige Ausgangsmaterialien oder auf einer kostspieligen Verfahrensführung zurückzuführen ist. So beschreibt EP 0 791 559 B1 die hydrothermale Herstellung von Magnesiumhydroxid. Hierbei ist die Verfahrensführung unter Druckbedingungen nachteilig.

Die Herstellung von Magnesiumhydroxiden erfolgt kommerziell durch Fällung aus Magnesiumchlorid-Lösungen mit einer Base oder durch Rehydratisierung von Magnesiumoxid mit Wasser. Jede der Varianten liefert allerdings unterschiedliche Produkte mit anderen Einsatzgebieten und Anwendungen. So ist es vorteilhaft, wenn Magnesiumhydroxid als Flammschutzmittel eine geringe spezifische Oberfläche aufweist.

Durch Zugabe einer Base, wie beispielsweise Natronlauge, zu Magnesiumchlorid kommt es zur Ausfällung von Magnesiumhydroxid. Dieses hat durch den schnellen Prozess der Fällung sehr hohe spezifische Oberflächen von meist größer ca. 20 m²/g zur Folge.

DE 103 04 314 A1 beschreibt Verfahren zur Herstellung von Magnesiumhydroxid mit definierter Partikelgröße und Partikelform durch Hydroxidbildung. Dies erfolgt mit Hilfe einer kontinuierlichen Zuführung der Reaktanten in ein System, das aus einem Schlaufenreaktor und einer damit verbundenen Kläreinrichtung besteht. Als ein Reaktant wird eine konzentrierte bis gesättigte Magnesiumsalzlösung eingesetzt, in der Magnesiumchlorid Hauptbestandteil ist. Das so erhaltene Magnesiumhydroxid weist eine vergleichsweise hohe Kornverteilung auf und zeigt zudem eine spezifische Oberfläche von mehr als 8 m²/g. Weitere Druckschriften, in denen die Fällung von Magnesiumhydroxid mit Hilfe von Magnesiumsalzen und einer Base beschrieben ist, sind unter anderem US 4,695,445 A, US 2010/0011993 A1 und US 4,098,762 A.

US 2021/114891 A1 beschreibt ein Magnesiumhydroxid enthaltendes Material, bei dem ein Oberflächenbehandlungsmittel einer Suspension des Materials zugegeben wird.

Nachteilig an den oben beschriebenen Verfahren ist das Vorhandensein von Salzen als Verunreinigung des erhaltenen Magnesiumhydroxides, insbesondere Chloride. Zudem werden Magnesiumhydroxide erhalten, die eine hohe spezifische Oberfläche aufweisen.

Neben der Fällung von Magnesiumsalzlösungen besteht die Möglichkeit der Rehydratisierung von Magnesiumoxid. Dies kann durch Dehydratisieren bzw. Kalzinieren eines gefällten Magnesiumhydroxids oder eines natürlich vorkommenden magnesiumhaltigen Minerals in Kalzinationsaggregaten oder durch Sprühröstung bzw. Pyrohydrolyse einer Magnesiumchloridlösung erfolgen. Dieses Verfahren ist ähnlich einer Sprühtrocknung aufgebaut. Der Unterschied liegt in der deutlich höheren Prozesstemperatur, welche zum Zersetzen des MgCl₂ in MgO und HCl führt. Das bei der Zersetzung entstehende HCl kann verwendet werden, um weiteres Magnesiumchlorid herzustellen (DE 103 04 314 A1).

Bei der Rehydratisierung von Magnesiumoxid zur Herstellung von Magnesiumhydroxid wurde in EP 0 568 488 A2 gefunden, dass der Einsatz von Magnesiumoxid mit einer BET-Oberfläche von 3-10 m²/g zu einem partikulären Magnesiumhydroxid führt, welches eine spezifische Oberfläche von 13-30 m²/g aufweist. Hierbei wird Magnesiumoxid in einer Konzentration von 200 g/l zu entionisiertem Wasser bei 90°C zugegeben. Für eine Anwendung im Flammschutzbereich wären jedoch geringere spezifischen Oberflächen von Vorteil.

Es besteht daher ein Bedarf an verbesserten Verfahren zur Herstellung von Magnesiumhydroxid niedriger spezifischer Oberfläche und möglichst geringen Mengen an Salzverunreinigungen. Zudem soll eine einfache Reaktionsführung möglich sein und es sollen vorzugsweise kristallisierte Produkte erhalten werden, welche besser geeignet sind als gemahlene, da beispielsweise eine bessere Verarbeitung in Kunststoffen erfolgen kann.

Eine Aufgabe der vorliegenden Erfindung liegt daher darin, ein solchen Verfahren bereitzustellen.

Die Aufgabe wird gelöst durch ein Verfahren zur Herstellung von Magnesiumhydroxid durch Rehydratisierung von kaustischem Magnesiumoxid die Schritte enthaltend
a) Zugeben des Magnesiumoxids zu einem wässrigen Medium unter Rühren;
b) Fortsetzen des Rührens nach erfolgter Zugabedes Magnesiumoxidsohne weiteres Zugeben;
c) Abtrennen des erhaltenen Magnesiumhydroxids;
d) Trocknen des Magnesiumhydroxids,
dadurch gekennzeichnet, dass das Zugeben mit einer Zugabegeschwindigkeit von höchstens 500 Gramm MgO / (Liter × Stunde) erfolgt.

Es wurde überraschend gefunden, dass bei der Rehydratisierung von Magnesiumoxid zu Magnesiumhydroxid durch Steuerung der Zugabegeschwindigkeit Hydroxide mit gewünscht geringer spezifischer Oberfläche erhalten werden können. Hierbei können ebenfalls Verunreinigungen durch Salze vermieden oder zumindest verringert werden, da Magnesiumsalze als Ausgangsmaterial vermieden werden. Zudem kann die Herstellung mit Hilfe einer einfachen Syntheseapparatur und einer einfachen Reaktionsführung erfolgen. Zudem werden kristalline Produkte erhalten. Weiterhin entstehen keine salzhaltigen Abwässer und eine drucklose Reaktion ist möglich.

Bei dem eingesetzten Magnesiumoxid handelt es sich um kaustisches Magnesiumoxid. Dieses kann durch Kalzinierung bei einer Temperatur im Bereich von 600°C bis 1000°C, vorzugsweise 800°C bis 900°C erhalten werden. Ausgangsmaterial ist hierbei üblicherweise Magnesiumcarbonat. Üblicherweise weist kaustisches Magnesiumoxid eine spezifische Oberfläche nach der BET Methode (DIN ISO 9277:2014-01) von 1 m²/g bis 200 m²/g, so dass im Rahmen der vorliegenden Erfindung unter kaustischem Magnesiumoxid insbesondere ein Magnesiumoxid mit einer BET Oberfläche in diesem Bereich verstanden wird. Vorzugsweise wird im Rahmen der vorliegenden Erfindung unter kaustischem Magnesiumoxid jedoch ein Magnesiumoxid verstanden, das eine spezifische Oberfläche nach der BET-Methode im Bereich von 1 m²/g bis 30 m²/g, vorzugsweise im Bereich von 2 m²/g bis 20 m²/g, mehr bevorzugt im Bereich von 3 m²/g bis 15 m²/g, aufweist.

Kaustisches Magnesiumoxid weist typischerweise kleine Kristallite mit moderater bis hoher Aktivität auf. Es zeichnet sich durch sein vergleichsweise gutes Löseverhalten aus und grenzt sich gegenüber hartgebranntem Magnesiumoxid ab (1100°C - 1650°C) und totgebranntem Magnesiumoxid (bis 2200°C) ab ("THE EFFECTS OF HYDRATING AGENTS ON THE HYDRATION OF INDUSTRIAL MAGNESIUM", OXIDEKGABO PHILLEMON MATABOLA, Masterarbeit, Universität von Südafrika, November 2006).

Die Aktivität von Magnesiumoxid wird maßgeblich durch den Kalzinationsgrad (Temperatur, Verweilzeit) bestimmt und spiegelt sich auch in der BET Oberfläche wider. "Dead-burned" MgO ist totgebrannt und kann nicht mehr hydratisiert werden (Kalzinationstemperaturen ab ca. 1600-1700°C). Kaustisches MgO ist noch aktiv und kann mit Wasser wieder zu Magnesiumhydroxid reagieren. Ist das MgO allerdings zu aktiv, können keine Hydroxide mit niedriger BET hergestellt werden. Dieses MgO hydratisiert so schnell, dass nur hohe BET Oberflächen resultieren. Außerdem liegt das Magnesiumhydroxid hierbei in Form von relativ großen und stabilen Aggregaten vor. Eine Erhöhung der Kalzinationstemperatur führt somit zu einer schwächeren Aktivität und Hydratisierungsrate.

Während die Angabe der spezifischen Oberfläche indirekt einen Aufschluss auf die Reaktivität des Magnesiumoxids gibt, kann auch eine direkte Bestimmung erfolgen. Hierbei existieren zwei Verfahren zur Bestimmung der Aktivität. Das hauptsächlich angewandte Verfahren arbeitet mit Zitronensäure, das andere mit Essigsäure. Der zugrundeliegende Test wird von C.A. Strydom et al., Journal of Thermal Analysis and Calorimetry, 80 (2005), 659-662 und "THE EFFECTS OF HYDRATING AGENTS ON THE HYDRATION OF INDUSTRIAL MAGNESIUM", OXIDEKGABO PHILLEMON MATABOLA, Masterarbeit, Universität von Südafrika, November 2006, insbesondere Seite 44, beschrieben.

Im Rahmen der vorliegenden Erfindung wurde die Aktivität wie folgt bestimmt. Es wird eine 0,40 N Zitronensäurelösung hergestellt. Zur Herstellung dieser Lösung wird in einen Messzylinder 28g Zitronensäure und 2ml Phenolphthalein vorgelegt. Anschließend wird der Messzylinder mit destilliertem Wasser auf einen Liter aufgefüllt. Des Weiteren wird eine Natronlauge hergestellt. Hierzu werden 40g NaOH Plättchen in destillierten Wasser gelöst und anschließend die Lösung mit destilliertem Wasser auf genau einen Liter aufgefüllt. Zur Standardisierung werden 100ml der hergestellten Zitronensäurelösung mit Natronlauge titriert. Ab 40 ml zugegebener Natronlauge muss sich die Lösung, bedingt durch den zugegebenen Indikator, pink färben. In diesem Fall wurde die Lösung richtig hergestellt und kann für den Aktivitätstest verwendet werden. Zur Durchführung des Aktivitätstests werden 100ml der Zitronensäurelösung in ein Becherglas vorgelegt. Anschließend wird die Lösung auf 30°C temperiert. Eine Temperaturabweichung von jeweils 0,2 °C ist dabei im Toleranzbereich. Die Geschwindigkeit des Rührers wird auf 500 rpm eingestellt. Anschließend werden 2 g der zu testenden Magnesiumoxidprobe auf ein Uhrglas eingewogen. 0,05 g Abweichung sind hierbei der Toleranzbereich. Im Anschluss wird die eingewogene Probe in einem Stück der Zitronensäurelösung zugegeben und die Zeit gestoppt, bis sich die Lösung pink färbt. Diese Zeit wird in Sekunden angegeben.

Im Rahmen der vorliegenden Erfindung weist das eingesetzte Magnesiumoxid vorzugsweise eine Aktivität im Bereich von 30 Sekunden bis 600 Sekunden, mehr bevorzugt von 70 s bis 400 s, weiter mehr bevorzugt von 90 s bis 300 s, auf.

Die Zugabe des Magnesiumoxides kann trocken in Form eines Pulvers erfolgen, so dass zur Volumenbestimmung bei der Zugabegeschwindigkeit nur das wässrige Medium herangezogen werden muss. Vorzugsweise wird jedoch das Magnesiumoxid in Form einer Suspension zugegeben. Dann muss zudem das Volumen der Suspension hinzugerechnet werden, um die Zugabegeschwindigkeit zu berechnen. Vorzugsweise ist die Suspension gut dispergiert. Dies kann beispielsweise über ein Dispergier-Rührwerk oder über eine Rührwerkskugelmühle realisiert werden.

Das wässrige Medium, in welches das Magnesiumoxid gegeben wird, kann Wasser eine wässrige Lösung oder eine wässrige Suspension, die beispielsweise bereits Magnesiumhydroxid aufweist, sein. Vorzugsweise wird jedoch Wasser, insbesondere vollentsalztes Wasser eingesetzt.

Vorzugsweise weist das wässrige Medium eine Temperatur im Bereich von 1°C bis 250°C, mehr bevorzugt im Bereich von 20°C bis 150°C, weiter mehr bevorzugt im Bereich von 60°C bis 100°C, weiter mehr bevorzugt im Bereich von 60°C bis <100°C, auf. Eine Durchführung der Rehydratisierung kann unter erhöhtem oder verminderten Druck stattfinden. Es wird jedoch eine Durchführung ohne erhöhten Druck bevorzugt, so dass diese bei Atmosphärendruck stattfindet.

Vorzugsweise liegt die Zugabegeschwindigkeit im Bereich von 0,1 g/(l×h) bis 500 g/(l×h), mehr bevorzugt im Bereich von 1 g/(l×h) bis 200 g/(l×h), weiter mehr bevorzugt im Bereich von 3 g/(l×h) bis 30 g/(l×h).

Das Zugeben des Magnesiumoxides kann kontinuierlich oder diskontinuierlich erfolgen. Sofern das erfindungsgemäße Verfahren diskontinuierlich durchgeführt wird, ist bevorzugt, dass die einzubringende Gesamtmenge in mindestens 2, vorzugsweise mindestens 3, weiter bevorzugt mindestens 4, weiter bevorzugt mindestens 5, Teilmengen zugegeben wird. Hierbei ist weiterhin bevorzugt, dass alle Teilmengen denselben Mengenanteil aufweisen. Weiterhin ist bevorzugt, dass die zeitlichen Abstände zwischen zwei aufeinanderfolgenden Teilmengenzugaben gleich groß sind. Weiterhin bevorzugt beträgt dieser zeitliche Abstand mindestens 0,5 Stunden.

Es ist bevorzugt, dass sich nach vollständiger Zugabe des Magnesiumoxides eine berechnete Gesamtkonzentration an Magnesiumoxid im Bereich von 10 g/l bis 500 g/l, mehr bevorzugt im Bereich von 50 g/l bis 400 g/l, weiter mehr bevorzugt im Bereich von 150 g/l bis 300 g/l, ergibt.

Hierbei berücksichtigt der Begriff "berechnete Konzentration" den Umstand, dass vor vollständiger Zugabe des Magnesiumoxides sich bereits ein Teil des Magnesiumoxides in Magnesiumhydroxid umgewandelt hat. Demzufolge setzt sich die berechnete Konzentration aus der zugegebenen Menge an MgO und dem Gesamtvolumen aus wässrigem Medium und ggfs. MgO-Suspension zusammen.

Nach Schritt a) erfolgen weitere Schritte resultierend in dem erfindungsgemäßen Verfahren die weiteren Schritte enthaltend
b) Fortsetzen des Rührens nach erfolgter Zugabe des Magnesiumoxides ohne weiteres Zugeben;
c) Abtrennen des erhaltenen Magnesiumhydroxids;
d) Trocknen des Magnesiumhydroxides.

Vorzugsweise erfolgt das Fortsetzen des Rührens in Schritt b) über einen Zeitraum von mindestens 3 Stunden, bevorzugt mindestens 5 h, mehr bevorzugt mindestens 10 h, weiter mehr bevorzugt mindestens 15 h, weiter mehr bevorzugt mindestens 20 h. Beispielsweise kann das Abtrennen in Schritt c) durch Filtration erfolgt. Bevorzugt erfolgt das Trocknen des Magnesiumhydroxides in Schritt d) mit Hilfe eines Mahltrockners. Durch die geringe Mahlleistung bleiben die kristallinen Primärkristalle weitestgehend erhalten. Vorhandene grobe Agglomerate und Aggregate werden jedoch sehr zuverlässig zerkleinert und verringert.

Das erhaltene Magnesiumhydroxid weist vorzugsweise eine spezifische Oberfläche nach BET von weniger als 8 m²/g auf.

Die vorliegende Erfindung wird anhand der nachfolgenden Beispiele beschrieben, ohne dass sich die Erfindung ausschließlich hierauf beschränken würde.

### Beispiele

Alle angegebenen Kornverteilungen wurden mit einem Cilas 1064 bestimmt. Vor den Messungen wurde den Proben jeweils 0,1 % Natriumpyrophosphat als Dispergiermittel zugesetzt und es erfolgte eine Behandlung mit Ultraschall für 140 Sekunden. Die Messungen erfolgten nach der Methode nach Fraunhofer.

Die spezifische Oberfläche wurde mit Hilfe eines Tristar II 3020 inkl. Ausheizstation (=Degasser) FlowPrep 060 von Micromeritics GmbH bestimmt.

Zur Bestimmung der Aktivität der eingesetzten Magnesiumoxidproben wurde eine 0,40 N Zitronensäurelösung hergestellt. Zur Herstellung dieser Lösung wurden in einen Messzylinder 28 g Zitronensäure und 2 ml Phenolphthalein vorgelegt. Anschließend wurde der Messzylinder mit destilliertem Wasser auf einen Liter aufgefüllt. Des Weiteren wurde eine Natronlauge hergestellt. Hierzu wurden 40 g NaOH Plättchen in destilliertem Wasser gelöst und anschließend die Lösung mit destilliertem Wasser auf genau einen Liter aufgefüllt. Zur Durchführung des Aktivitätstests wurden 100ml der Zitronensäurelösung in ein Becherglas vorgelegt. Anschließend wurde die Lösung auf 30°C temperiert. Die Geschwindigkeit des Rührers wurde auf 500 rpm eingestellt. Anschließend wurden 2 g der zu testenden Magnesiumoxidprobe auf ein Uhrglas eingewogen. Im Anschluss wurde die eingewogene Probe in einem Stück der Zitronensäurelösung zugegeben und die Zeit gestoppt, bis sich die Lösung pink färbt. Diese Zeit wird in Sekunden angegeben.

Folgende Magnesiumoxide wurden in den Versuchen eingesetzt:

| Bezeichnung | MgO 1 | MgO 2 |
|---|---|---|
| BET (m²/g) | 3 - 4 | 10 - 15 |
| Aktivität (s) | 240 - 280 | 110 - 210 |
| Glühverlust (%) | 1,7 - 3,0 | 0,5 - 1,8 |

### Beispiel 1

In 1,5 Liter vollentsalztes Wasser, welches bei 80 °C kontinuierlich gerührt wurde, wurden nach jeweils einer Stunde Portionen von 30 g des Magnesiumoxids MgO 1 zugegeben bis eine Gesamtmenge von 150 g erreicht war. Somit wurde das Magnesiumoxid mit einer Geschwindigkeit von 20 g pro Stunde und pro Liter zugegeben bis eine Menge von 100 g Magnesiumoxid pro Liter Wasser erreicht war. Nach der letzten Zugabe wurde die Suspension für weitere 3 Stunden bei 80 °C gerührt, im Anschluss filtriert und getrocknet. Die Messung der BET ergab einen Wert von 5,2 m²/g. Der Glühverlust lag bei 30,4 Gew.-%.

### Beispiel 2

In 1,5 Liter vollentsalztes Wasser, welches bei 80 °C kontinuierlich gerührt wurde, wurden nach jeweils einer Stunde Portionen von 30 g des Magnesiumoxids MgO 2 zugegeben bis eine Gesamtmenge von 150 g erreicht war. Somit wurde das Magnesiumoxid mit einer Geschwindigkeit von 20 g pro Stunde und pro Liter zugegeben bis eine Menge von 100 g Magnesiumoxid pro Liter Wasser erreicht war. Nach der letzten Zugabe wurde die Suspension für weitere 3 Stunden bei 80 °C gerührt, im Anschluss filtriert und getrocknet. Die Messung der BET ergab einen Wert von 6,9 m²/g. Der Glühverlust lag bei 27,1 Gew.-%.

### Beispiel 3

In 1,5 Liter vollentsalztes Wasser, welches bei 80 °C kontinuierlich gerührt wurde, wurden nach jeweils drei Stunden Portionen von 30 g des Magnesiumoxids MgO 2 zugegeben bis eine Gesamtmenge von 150 g erreicht war. Somit wurde das Magnesiumoxid mit einer Geschwindigkeit von 6,7 g pro Stunde und pro Liter zugegeben bis eine Menge von 100 g Magnesiumoxid pro Liter Wasser erreicht war. Nach der letzten Zugabe wurde die Suspension für weitere 20 Stunden bei den 80 °C gerührt, im Anschluss filtriert und getrocknet. Die Messung der BET ergab einen Wert von 5,4 m²/g. Der Glühverlust lag bei 28,9 Gew.-%.

### Beispiel 4

In 1,5 Liter vollentsalztes Wasser, welches bei 80 °C kontinuierlich gerührt wurde, wurden nach jeweils drei Stunden Portionen von 30 g des Magnesiumoxids MgO 1 zugegeben bis eine Gesamtmenge von 300 g erreicht war. Somit wurde das Magnesiumoxid mit einer Geschwindigkeit von 6,7 g pro Stunde und pro Liter zugegeben bis eine Menge von 200 g Magnesiumoxid pro Liter Wasser erreicht war. Nach der letzten Zugabe wurde die Suspension für weitere 36 Stunden bei den 80 °C gerührt, im Anschluss filtriert und getrocknet. Die Messung der BET ergab einen Wert von 4,8 m²/g. Die Korngrößenverteilung wies einen D10 von 0,7 µm einen D50 von 2,5 µm und einen D90 von 15,6 µm auf. Der Glühverlust lag bei 30,7 Gew.-%.

### Beispiel 5

In 1,5 Liter vollentsalztes Wasser, welches bei 80 °C kontinuierlich gerührt wurde, wurden nach jeweils drei Stunden Portionen von 30 g des Magnesiumoxids MgO 2 zugegeben bis eine Gesamtmenge von 300 g erreicht war. Somit wurde das Magnesiumoxid mit einer Geschwindigkeit von 6,7 g pro Stunde und pro Liter zugegeben bis eine Menge von 200 g Magnesiumoxid pro Liter Wasser erreicht war. Nach der letzten Zugabe wurde die Suspension für weitere 36 Stunden bei den 80 °C gerührt, im Anschluss filtriert und getrocknet. Die Messung der BET ergab einen Wert von 4,8 m²/g. Die Korngrößenverteilung wies einen D10 von 0,7 µm einen D50 von 1,8 µm und einen D90 von 14,6 µm auf. Der Glühverlust lag bei 29,6 Gew.-%.

### Vergleichsbeispiel 6

In 1,5 Liter vollentsalztes Wasser, welches bei 80 °C kontinuierlich gerührt wurde, wurden 375 g des Magnesiumoxids MgO 1 zugegeben (250g/l). Nach der letzten Zugabe, welche nach für diese Menge üblichen 5 Minuten erfolgte, wurde die Suspension für zwei Tage bei den 80 °C gerührt, im Anschluss filtriert und getrocknet. Daraus ergibt sich eine Zugabegeschwindigkeit von 3000 Gramm pro Liter pro Stunde. Die Messung der BET ergab einen Wert von lediglich 8,4 m²/g. Die Korngrößenverteilung wies einen D10 von 1,2 µm einen D50 von 3,6 µm und einen D90 von 11,0 µm auf Der Glühverlust lag bei 30,8 Gew.-%.

### Beispiel 7 (Upscale von Beispiel 4 in den Technikumsmaßstab)

In 700 Liter vollentsalztes Wasser, welches bei 80 °C kontinuierlich gerührt wurde, wurden nach jeweils drei Stunden Portionen von 14 kg des Magnesiumoxids MgO 1 zugegeben bis eine Gesamtmenge von 140 kg erreicht war. Somit wurde das Magnesiumoxid mit einer Geschwindigkeit von 6,7 g pro Stunde und pro Liter zugegeben bis eine Menge von 200 g Magnesiumoxid pro Liter Wasser erreicht war. Nach der letzten Zugabe wurde die Suspension für weitere 36 Stunden bei den 80 °C gerührt, im Anschluss filtriert und getrocknet.

Die Filtration erfolgte hierbei mit einer Kammerfilterpresse. Im Anschluss wurde der Filterkuchen auf einem Mahltrocknungsaggregat getrocknet und zerkleinert. Während dieses Prozesses wurden 4 Proben genommen und analysiert.

Die Analytik vor der 4. Magnesiumoxid-Zugabe ergab eine BET von 5,1 m²/g und einen Glühverlust von 31 Gew.-%. Die Analytik vor der 7. Magnesiumoxid-Zugabe ergab eine BET von 4,4 m²/g und einen Glühverlust von 31 Gew.-%. Die Analytik nach der vollständigen Zugabe und anschließenden Reifung für 36 h ergab eine BET von 3,3 m²/g und einen Glühverlust von 31,1 Gew.-%. Die Korngrößenverteilung wies einen D10 von 1,09 µm, einen D50 von 5,07 µm und einen D90 von 12,09 µm auf. Das Endprodukt nach der Mahltrocknung hatte eine BET von 3,9 m²/g und einen Glühverlust von 31,1 Gew.-%. Die Korngrößenverteilung wies einen D10 von 0,76 µm, einen D50 von 2,08 und einen D90 von 5,29 µm auf.

## Patentansprüche

1. Verfahren zur Herstellung von Magnesiumhydroxid durch Rehydratisierung von kaustischem Magnesiumoxid die Schritte enthaltend
a) Zugeben des Magnesiumoxids zu einem wässrigen Medium unter Rühren;
b) Fortsetzen des Rührens nach erfolgter Zugabe des Magnesiumoxides ohne weiteres Zugeben;
c) Abtrennen des erhaltenen Magnesiumhydroxids;
d) Trocknen des Magnesiumhydroxides;
**dadurch gekennzeichnet, dass** das Zugeben mit einer Zugabegeschwindigkeit von höchstens 500 Gramm MgO / (Liter × Stunde) erfolgt.

2. Verfahren nach Anspruch 1, **dadurch gekennzeichnet, dass** das Magnesiumoxid eine spezifische Oberfläche nach der BET-Methode im Bereich von 1 m²/g bis 30 m²/g aufweist.

3. Verfahren nach Anspruch 1 oder 2, **dadurch gekennzeichnet, dass** das Magnesiumoxid eine Aktivität im Bereich von 30 Sekunden bis 600 Sekunden, vorzugsweise von 70 s bis 400 s, mehr bevorzugt von 90 s bis 300 s, aufweist.

4. Verfahren nach einem oder mehreren der Ansprüche 1 bis 3, **dadurch gekennzeichnet, dass** das Magnesiumoxid in Form einer Suspension zugegeben wird.

5. Verfahren nach einem oder mehreren der Ansprüche 1 bis 4, **dadurch gekennzeichnet, dass** das wässrige Medium Wasser, eine wässrige Lösung oder eine wässrige Suspension, vorzugsweise vollentsalztes Wasser, ist.

6. Verfahren nach einem oder mehreren der Ansprüche 1 bis 5, **dadurch gekennzeichnet, dass** die wässrige Lösung eine Temperatur im Bereich von 1°C bis 250°C, vorzugsweise von 20°C bis 150°C, mehr bevorzugt von 60°C bis 100°C, weiter mehr bevorzugt im Bereich von 60°C bis <100°C, aufweist.

7. Verfahren nach einem oder mehreren der Ansprüche 1 bis 6, **dadurch gekennzeichnet, dass** die Zugabegeschwindigkeit im Bereich von 0,1 g/(l×h) bis 500 g/(l×h), vorzugsweise von 1 g/(l×h) bis 200 g/(l×h), mehr bevorzugt von 3 g/(l×h) bis 30 g/(l×h), liegt.

8. Verfahren nach einem oder mehreren der Ansprüche 1 bis 7, **dadurch gekennzeichnet, dass** das Zugeben des Magnesiumoxides kontinuierlich oder diskontinuierlich erfolgt.

9. Verfahren nach Anspruch 8, **dadurch gekennzeichnet, dass** das Magnesiumoxid diskontinuierlich in mindestens 2, vorzugsweise mindestens 3, weiter bevorzugt mindestens 4, weiter bevorzugt mindestens 5, Teilmengen zugegeben wird.

10. Verfahren nach einem oder mehreren der Ansprüche 1 bis 9, **dadurch gekennzeichnet, dass** nach vollständiger Zugabe des Magnesiumoxides sich eine berechnete Gesamtkonzentration an Magnesiumoxid im Bereich von 10 g/l bis 500 g/l, vorzugsweise von 50 g/l bis 400 g/l, mehr bevorzugt von 150 g/l bis 300 g/l ergibt.

11. Verfahren nach Anspruch 10, **dadurch gekennzeichnet, dass** das Fortsetzen des Rührens in Schritt b) über einen Zeitraum von mindestens 3 Stunden, vorzugsweise mindestens 5 h, weiter bevorzugt mindestens 10 h, weiter bevorzugt mindestens 15 h, weiter bevorzugt mindestens 20 h, erfolgt.

12. Verfahren nach Anspruch 10 oder 11, **dadurch gekennzeichnet, dass** das Abtrennen in Schritt c) durch Filtration erfolgt.

13. Verfahren nach einem oder mehreren der Ansprüche 10 bis 12, **dadurch gekennzeichnet, dass** das Trocknen des Magnesiumhydroxides in Schritt d) mit Hilfe eines Mahltrockners erfolgt.

14. Verfahren nach einem oder mehreren der Ansprüche 10 bis 13, **dadurch gekennzeichnet, dass** das erhaltene Magnesiumhydroxid eine spezifische Oberfläche nach BET von weniger als 8 m²/g aufweist.

## Claims

1. Method for producing magnesium hydroxide by rehydration of caustic magnesium oxide, comprising the steps of
a) adding the magnesium oxide to an aqueous medium with stirring;
b) continuing the stirring after addition of the magnesium oxide has taken place, without further adding;
c) removing the magnesium hydroxide obtained;
d) drying the magnesium hydroxide;
**characterized in that** the adding takes place with a rate of addition of at most 500 g of MgO/(litre × hour).

2. Method according to Claim 1, **characterized in that** the magnesium oxide has a specific surface area according to the BET method in the range from 1 m²/g to 30 m²/g.

3. Method according to Claim 1 or 2, **characterized in that** the magnesium oxide has an activity in the range from 30 seconds to 600 seconds, preferably from 70 s to 400 s, more preferably from 90 s to 300 s.

4. Method according to one or more of Claims 1 to 3, **characterized in that** the magnesium oxide is added in the form of a suspension.

5. Method according to one or more of Claims 1 to 4, **characterized in that** the aqueous medium is water, an aqueous solution or an aqueous suspension, preferably fully demineralized water.

6. Method according to one or more of Claims 1 to 5, **characterized in that** the aqueous solution has a temperature in the range from 1°C to 250°C, preferably from 20°C to 150°C, more preferably from 60°C to 100°C, more preferably still in the range from 60°C to < 100°C.

7. Method according to one or more of Claims 1 to 6, **characterized in that** the rate of addition is in the range from 0.1 g/(l × h) to 500 g/(l × h), preferably from 1 g/(l × h) to 200 g/(l × h), more preferably from 3 g/(l × h) to 30 g/(l × h).

8. Method according to one or more of Claims 1 to 7, **characterized in that** the adding of the magnesium oxide takes place continuously or discontinuously.

9. Method according to Claim 8, **characterized in that** the magnesium oxide is added discontinuously in at least 2, preferably at least 3, more preferably at least 4, more preferably at least 5 portions.

10. Method according to one or more of Claims 1 to 9, **characterized in that** after complete addition of the magnesium oxide, a calculated total concentration of magnesium oxide in the range from 10 g/l to 500 g/l, preferably from 50 g/l to 400 g/l, more preferably from 150 g/l to 300 g/l is obtained.

11. Method according to Claim 10, **characterized in that** the continuing of the stirring in step b) takes place over a period of at least 3 hours, preferably at least 5 h, more preferably at least 10 h, more preferably at least 15 h, more preferably at least 20 h.

12. Method according to Claim 10 or 11, **characterized in that** the removing in step c) takes place by filtration.

13. Method according to one or more of Claims 10 to 12, **characterized in that** the drying of the magnesium hydroxide in step d) takes place with the aid of a mill dryer.

14. Method according to one or more of Claims 10 to 13, **characterized in that** the magnesium hydroxide obtained has a BET specific surface area of less than 8 m²/g.

## Revendications

1. Procédé de préparation d'hydroxyde de magnésium par réhydratation d'oxyde de magnésium caustique, comprenant les étapes suivantes :
a) addition de l'oxyde de magnésium à un milieu aqueux sous agitation ;
b) poursuite de l'agitation après la fin de l'addition de l'oxyde de magnésium sans addition supplémentaire ;
c) séparation de l'hydroxyde de magnésium obtenu ;
d) séchage de l'hydroxyde de magnésium ;
**caractérisé en ce que** l'addition a lieu à une vitesse d'addition d'au plus 500 grammes MgO/(litre x heure).

2. Procédé selon la revendication 1, **caractérisé en ce que** l'oxyde de magnésium présente une aire spécifique par la méthode BET dans la plage de 1 m²/g à 30 m²/g.

3. Procédé selon la revendication 1 ou 2, **caractérisé en ce que** l'oxyde de magnésium présente une activité dans la plage de 30 secondes à 600 secondes, de préférence de 70 s à 400 s, plus préférentiellement de 90 s à 300 s.

4. Procédé selon l'une ou plusieurs des revendications 1 à 3, **caractérisé en ce que** l'oxyde de magnésium est ajouté sous forme d'une suspension.

5. Procédé selon l'une ou plusieurs des revendications 1 à 4, **caractérisé en ce que** le milieu aqueux est l'eau, une solution aqueuse ou une suspension aqueuse, de préférence une eau entièrement déminéralisée.

6. Procédé selon l'une ou plusieurs des revendications 1 à 5, **caractérisé en ce que** la solution aqueuse présente une température dans la plage de 1 °C à 250 °C, de préférence de 20 °C à 150 °C, plus préférentiellement de 60 °C à 100 °C, tout spécialement dans la plage de 60 °C à < 100 °C.

7. Procédé selon l'une ou plusieurs des revendications 1 à 6, **caractérisé en ce que** la vitesse d'addition est comprise dans la plage de 0,1 g/(l x h) à 500 g/(l x h), de préférence de 1 g/(l x h) à 200 g/(l x h), plus préférentiellement de 3 g/(l x h) à 30 g/(l x h).

8. Procédé selon l'une ou plusieurs des revendications 1 à 7, **caractérisé en ce que** l'addition de l'oxyde de magnésium a lieu d'une manière continue ou discontinue.

9. Procédé selon la revendication 8, **caractérisé en ce que** l'oxyde de magnésium est ajouté d'une manière discontinue en au moins 2, de préférence au moins 3, plus préférentiellement d'au moins 4, plus préférentiellement d'au moins 5 quantités partielles.

10. Procédé selon l'une ou plusieurs des revendications 1 à 9, **caractérisé en ce que**, après la fin de l'addition de l'oxyde de magnésium, on obtient une concentration totale calculée d'oxyde de magnésium dans la plage de 10 g/L à 500 g/L, de préférence de 50 g/L à 400 g/L, plus préférentiellement de 150 g/L à 300 g/L.

11. Procédé selon la revendication 10, **caractérisé en ce que** la poursuite de l'agitation dans l'étape b) a lieu sur une durée d'au moins 3 heures, de préférence d'au moins 5 heures, plus préférentiellement d'au moins 10 heures, plus préférentiellement d'au moins 15 heures, plus préférentiellement d'au moins 20 heures.

12. Procédé selon la revendication 10 ou 11, **caractérisé en ce que** la séparation de l'étape c) a lieu par filtration.

13. Procédé selon l'une ou plusieurs des revendications 10 à 12, **caractérisé en ce que** le séchage de l'hydroxyde de magnésium dans l'étape d) a lieu à l'aide d'un broyeur-sécheur.

14. Procédé selon l'une ou plusieurs des revendications 10 à 13, **caractérisé en ce que** l'hydroxyde de magnésium obtenu présente une aire spécifique selon BET inférieure à 8 m²/g.
